# EUROPÄISCHE PATENTSCHRIFT

(11) **EP 2 791 517 B1**
(45) Veröffentlichungstag und Bekanntmachung des Hinweises auf die Patenterteilung: **16.09.2015**
(21) Anmeldenummer: 12794179.7
(22) Anmeldetag: 07.11.2012
(51) Int. Cl.: F16B 43/00, F16J 15/12

(54) **ABDICHTUNG, VERSCHRAUBUNG MIT DER ABDICHTUNG UND DEREN JEWEILIGE VERWENDUNG**
SEAL, SCREW CONNECTION HAVING THE SEAL, AND USE THEREOF
JOINT D'ÉTANCHÉITÉ, ASSEMBLAGE VISSÉ POURVU DUDIT JOINT D'ÉTANCHÉITÉ ET UTILISATION RESPECTIVE DUDIT JOINT D'ÉTANCHÉITÉ

(30) Priorität: 12.12.2011 DE 102011120724
(43) Veröffentlichungstag der Anmeldung: 22.10.2014
(73) Patentinhaber: Carl Freudenberg KG, 69469 Weinheim (DE)
(72) Erfinder: LAUER, Frank, 69231 Rauenberg (DE); ECKSTEIN, Julia, 68309 Mannheim (DE); MITSCHKAL, Christian, 69483 Wald-Michelbach (DE); KRAMER, Thomas, 64668 Rimbach (DE)
(74) Vertreter: Mattausch, Klaus
(86) Internationale Anmeldenummer: PCT/EP2012/004634
(87) Internationale Veröffentlichungsnummer: WO 2013/087134

(56) Entgegenhaltungen:
- EP-A1- 0 795 691
- WO-A1-01/65128
- DE-A1- 19 508 977
- JP-A- 2007 024 280
- US-A- 4 702 657

## Beschreibung

### Technisches Gebiet

Die Erfindung betrifft eine Abdichtung eines Befestigungselements, umfassend das Befestigungselement und eine Unterlegscheibe dafür, wobei das Befestigungselement und die Unterlegscheibe koaxial und axial benachbart zueinander angeordnet sind, wobei die Unterlegscheibe außenumfangsseitig einen Dichtwulst aus einem gummielastischen Dichtungswerkstoff aufweist und wobei der Dichtwulst die Unterseite des Befestigungselements während der bestimmungsgemäßen Verwendung der Abdichtung dichtend berührt.

### Stand der Technik

Solche Abdichtungen sind allgemein bekannt. Das Befestigungselement wird dabei z. B. durch eine Schraube und die Unterlegscheibe durch einen sogenannten Usit-Ring gebildet. Bei Usit-Ringen handelt es sich um metallische Flachringe mit trapezförmig ausgebildeten Dichtwulsten, die zur Abdichtung von Verschraubungen und Flanschverbindungen dienen. Usit-Ringe sind also selbstdichtende Unterlegscheiben.

Zwei unterschiedliche Bauformen von Usit-Ringen sind bekannt. Bei einer Bauform ist der Dichtwulst innenliegend, bei der anderen Bauform demgegenüber außenliegend angeordnet.

Beim Anziehen des Befestigungselements wird der gummielastische Dichtwulst so lange elastisch verformt, bis ein metallischer Kraftschluss über den Flachring erreicht ist.

Verschiedene Werkstoffpaarungen für den Flachring des Usit-Ringes und den Dichtwulst sind bekannt. So kann der Flachring beispielsweise aus einem Normalstahl bestehen, der Dichtwulst - in Abhängigkeit von den vorkommenden Temperaturen - aus einem NBR- oder FKM-Werkstoff. NBR-Werkstoffe gelangen beispielsweise dann zur Anwendung, wenn Luft und Mineralöle bis 100°C abzudichten sind. FKM-Werkstoffe gelangen demgegenüber zur Abdichtung von Luft und Mineral- oder synthetischen Ölen mit jeweils höheren Temperaturen zur Anwendung.

Für Anwendungen im produktberührenden Bereich in der Lebensmittel- oder Pharmaindustrie oder auch zur Anwendung in Anlagen im Lebensmittel- oder Pharmabereich sind die vorbekannten Abdichtungen nicht geeignet, weil die vorbekannten Abdichtungen viele schlecht erreichbare und damit auch schlecht reinigbare Spalten und Vorsprünge aufweisen. Verunreinigungen in diesen Bereichen können zu einer Verkeimung führen, was im Lebensmittel- oder Pharmabereich nicht akzeptabel/zulässig ist.

### Darstellung der Erfindung

Der Erfindung liegt die Aufgabe zugrunde, eine Abdichtung eines Befestigungselements der eingangs genannten Art derart weiterzuentwickeln, dass die Abdichtung auch im Lebensmittel- oder Pharmabereich zur Anwendung gelangen kann und alle in diesen Bereichen vorgeschriebenen Hygiene-Anforderungen erfüllt. Insbesondere soll eine Verkeimung der Abdichtung dadurch ausgeschlossen werden, dass die Abdichtung einfach und gut zu reinigen ist.

Diese Aufgabe wird erfindungsgemäß durch eine Abdichtung nach Anspruch 1 gelöst. Auf vorteilhafte Ausgestaltungen nehmen die auf Anspruch 1 direkt oder indirekt rückbezogenen Ansprüche Bezug.

Nach Anspruch 1 ist vorgesehen, dass das Befestigungselement auf der der Unterlegscheibe axial zugewandten Seite einen Bund aufweist, mit einer der Unterlegscheibe axial zugewandten Unterseite, wobei die Unterlegscheibe eine dem Bund axial zugewandte Oberseite aufweist, wobei sich die Unterseite des Bundes und die Oberseite der Unterlegscheibe während der bestimmungsgemäßen Verwendung der Abdichtung dichtend anliegend berühren, wobei die Unterseite des Bundes und die Oberseite der Unterlegscheibe im Wesentlichen deckungsgleich ausgebildet sind und wobei der Dichtwulst die außenumfangsseitige Begrenzung der Unterseite des Bundes dichtend anliegend berührt.

Durch eine derartige Ausgestaltung können Verunreinigungen um die Abdichtung herum im CIP (Clean In Place)-Verfahren gereinigt werden. Zur gründlichen, hygienisch einwandfreien Reinigung der Abdichtung ist es deshalb nicht erforderlich, die miteinander befestigten Bauteile zu demontieren. Durch die einfache Möglichkeit der gründlichen, hygienisch einwandfreien Reinigung wird einer Verkeimung der Abdichtung wirkungsvoll vorgebeugt. Bei der erfindungsgemäßen Abdichtung gibt es keine engen, nicht reinigbare Spalten oder Vorsprünge, hinter denen sich Verunreinigungen anlagern könnten, so dass die erfindungsgemäße Abdichtung alle Hygiene-Vorschriften für den Lebensmittel- und Pharmabereich erfüllt. Die hygienisch einwandfreie Abdichtung ist hauptsächlich darauf zurückzuführen, dass das Befestigungselement und die Unterlegscheibe auf ihren einander axial zugewandten Seiten im Wesentlichen deckungsgleich ausgebildet sind. Der Nachteil aus dem Stand der Technik, dass z. B. der Kopf einer Sechskantschraube auf einem kreisringförmigen Usit-Ring mit kreisringförmigem Dichtwulst abgestützt ist, der einen wesentlich kleineren Außendurchmesser aufweist, als der Kopf der Schraube und dadurch Bereiche der Abdichtung entstehen, die praktisch nicht oder nur unzureichend zu reinigen sind, wird dadurch vermieden.

Das Befestigungselement kann als Schraube oder als Mutter ausgebildet sein. Gelangt eine Mutter zur Anwendung, ist es im Hinblick auf eine möglichst einfache und wirkungsvolle Reinigung der Abdichtung erforderlich, dass die Mutter als Hutmutter ausgebildet ist.

Das Befestigungselement und der Bund sind bevorzugt einstückig ineinander übergehend ausgebildet. Auch hierdurch werden nur schwer zu reinigende Spalten, in denen sich abzudichtendes Medium oder Verunreinigungen absetzen könnten, vermieden. Befestigungselemente mit einem Bund sind in DIN EN 1665 offenbart. Es handelt sich dabei um Sechskantschrauben, wobei der sechskantige Schraubenkopf auf der dem Gewinde axial zugewandten Seite mit einem kreisförmigen Bund einstückig ineinander übergehend ausgebildet ist. Dadurch, dass die Möglichkeit besteht, genormte Befestigungselemente für die erfindungsgemäße Abdichtung zu verwenden, ist die Abdichtung einfach und kostengünstig herstellbar und kann problemlos an die jeweiligen Gegebenheiten des Anwendungsfalles, z. B. durch unterschiedlich dimensionierte Sechskantschrauben nach DIN EN 1665, angepasst werden.

Gemäß einer vorteilhaften Ausgestaltung kann es vorgesehen sein, dass der Dichtwulst auf seiner der Unterseite des Bundes axial zugewandten Seite eine im Wesentlichen trichterförmig ausgebildete Oberfläche aufweist.

Die Oberfläche kann zumindest zweistufig radial nach außen erweitert sein. Diese mehrstufige Kontur der Oberfläche bewirkt in der ersten Stufe eine Initialdichtkraft, also die Vorspannkraft für die Verschraubung und in der zweiten Stufe eine spaltfreie Anschmiegung des gummielastischen Dichtungswerkstoffs des Dichtwulsts an der Unterseite des Bundes.

Die Oberfläche der Oberseite der Unterlegscheibe ist kongruent zur Unterseite des Bunds des Befestigungselements ausgebildet.

Die Oberfläche der Oberseite kann selbst zentrierend ausgebildet sein.

Hierbei ist von Vorteil, dass sich die Unterlegscheibe mit dem Dichtwulst an die Unterseite des Bundes, unabhängig von dessen Toleranzlage, bündig anschmiegt. Die Montage der Abdichtung ist durch diese Selbstzentrierung der Unterlegscheibe wesentlich vereinfacht. Die Gefahr von Montagefehlern ist auf ein Minimum reduziert.

Außerdem betrifft die Erfindung eine Verschraubung, umfassend eine Abdichtung mit Befestigungselement und Unterlegscheibe, wie zuvor beschrieben, wobei das Befestigungselement kraft- und/oder formschlüssig in einer Bohrung eines Maschinenelements angeordnet ist, wobei der Dichtwulst unter elastischer axialer Vorspannung dichtend zwischen der Unterseite des Bundes des Befestigungselements und dem Maschinenelement angeordnet ist. Durch den Dichtwulst und dessen Anordnung in der Verschraubungen hat die Verschraubung insgesamt keine nicht-reinigbaren Totzonen, weil das Befestigungselement und/oder die Unterlegscheibe keine Ecken/Vorsprünge/Spalten aufweisen oder begrenzen, unter denen sich Verunreinigungen, die dann zu einer Verkeimung führen, festsetzen könnten. Die Verschraubung ist einfach zu reinigen, hat glatte Oberflächen und erfüllt daher die CIP-Anforderung für eine hygienische Reinigung, insbesondere in der Lebensmittel- oder Pharmaindustrie.

Außerdem betrifft die Erfindung die Verwendung einer Abdichtung und einer Verschraubung, jeweils wie zuvor beschrieben, in produktführenden Bereichen der Lebensmittel- oder Pharmaindustrie und/oder in Produktionsanlagen im Lebensmittel- oder Pharmabereich.

Speziell für diese Verwendung ist es unbedingt erforderlich, dass Abdichtungen und/oder Verschraubungen möglichst einfach hygienisch einwandfrei gereinigt werden können, um eine Keimbildung und damit eine Beeinträchtigung der Lebensmittel oder Medikamente, die mit der Verschraubung in Berührung kommen und/oder in entsprechenden Produktionsanlagen verarbeitet/erzeugt werden, sicher zu verhindern.

Ein Ausführungsbeispiel der erfindungsgemäßen Verschraubung mit der erfindungsgemäßen Abdichtung wird nachfolgend anhand der Figuren 1 bis 3 näher erläutert. Diese zeigen ein Ausführungsbeispiel jeweils in schematischer Darstellung:

### Kurzbeschreibung der Zeichnung

- Fig. 1: eine Verschraubung mit der Abdichtung im noch nicht verbauten Zustand,
- Fig. 2: ein Ausschnitt aus der Verschraubung aus Fig. 1 während der Montage,
- Fig. 3: die Verschraubung aus Fig. 1 im verbauten Zustand während ihrer bestimmungsgemäßen Verwendung.

### Ausführung der Erfindung

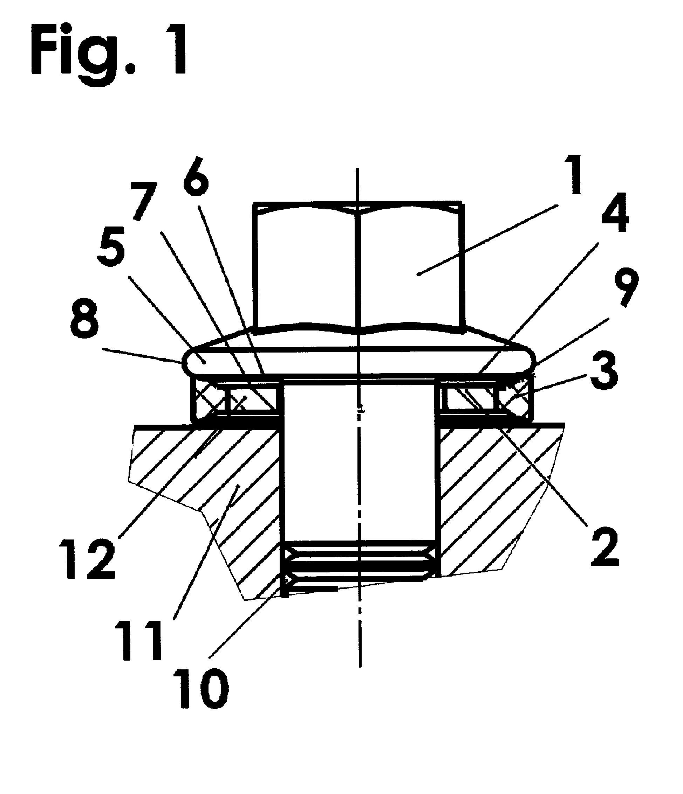

In den Fig. 1 bis 3 ist ein Ausführungsbeispiel einer Verschraubung gezeigt, die eine Abdichtung umfasst.

Das Befestigungselement 1 ist in diesem Ausführungsbeispiel durch eine Schraube mit einem Bund 5 gebildet, z. B. nach DIN EN 1665.

Außerdem umfasst die Abdichtung eine Unterlegscheibe 2 für das Befestigungselement 1, die in axialer Richtung zwischen dem Bund 5 des Befestigungselements 1 und dem Maschinenelement 11 angeordnet ist. Die Unterlegscheibe 2 umfasst einen zentral angeordneten metallischen Flachring 12, der außenumfangsseitig von dem Dichtwulst 3 umschlossen ist, der aus einem gummielastischen Dichtungswerkstoff, z. B. aus NBR oder FKM, besteht.

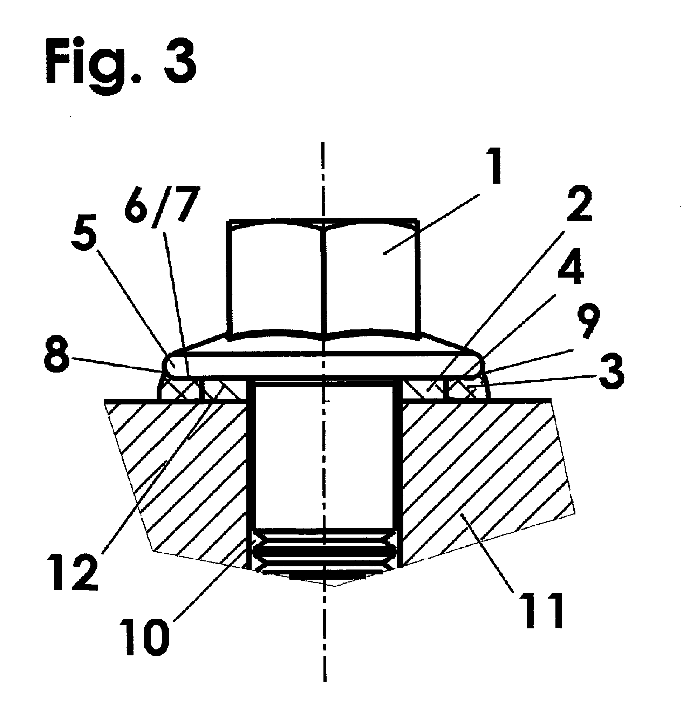

Das Befestigungselement 1 weist auf der der Unterlegscheibe 2 axial zugewandten Seite den Bund 5 mit seiner Unterseite 6 auf, wobei das Befestigungselement 1 und der Bund 5 einstückig ineinander übergehend und materialeinheitlich ausgebildet sind. Die Unterseite 6 des Bundes 5 und die Oberseite 7 der Unterlegscheibe 2 berühren sich während der bestimmungsgemäßen Verwendung der Abdichtung, wie in Fig. 3 gezeigt, dichtend anliegend.

Entscheidend ist, dass die Unterseite 6 des Bundes 5 und die Oberseite 7 der Unterlegscheibe 2 im Wesentlichen deckungsgleich ausgebildet sind, weil dadurch nicht reinigbare Totzonen der Verschraubung, z. B. zwischen dem Schraubenkopf und dem Maschinenelement 11, vermieden werden. Dadurch, dass die Verschraubung und die Abdichtung einfach und wirkungsvoll gereinigt werden können, wird einer Verkeimung in diesem Bereich wirkungsvoll vorgebeugt, so dass die Abdichtung und die Verschraubung in produktführenden Bereichen der Lebensmittel- oder Pharmaindustrie und/oder in Produktionsanlagen im Lebensmittel- oder Pharmabereich eingesetzt werden kann. Alle üblichen Hygiene-Vorschriften werden erfüllt.

Hygiene-Vorschriften sind beispielsweise Vorschriften der EHEDG (European Hygienic Engineering & Design Group) und/oder die Bestimmungen der amerikanischen FDA (Food and Drug Administration).

In Fig. 1 ist die erfindungsgemäße Verschraubung im noch nicht verbauten Zustand gezeigt. Das Befestigungselement 1 ist noch nicht endgültig in die Bohrung 10 des Maschinenelements 11 ein geschraubt und die Unterlegscheibe 2 deshalb noch nicht zwischen der Unterseite 6 des Bundes 5 des Befestigungselements 1 und dem Maschinenelement 11 in axialer Richtung unter elastischer Vorspannung dichtend angeordnet.

Der Dichtwulst 3 hat auf seiner der Unterseite 6 des Bundes 5 axial zugewandten Seite eine zweistufig, radial nach außen trichterförmig erweitert ausgebildete Oberfläche 9, so dass sich die Unterlegscheibe 2 während der Montage der Abdichtung bezogen auf die Unterseite 6 des Bundes 5 selbsttätig zentriert.

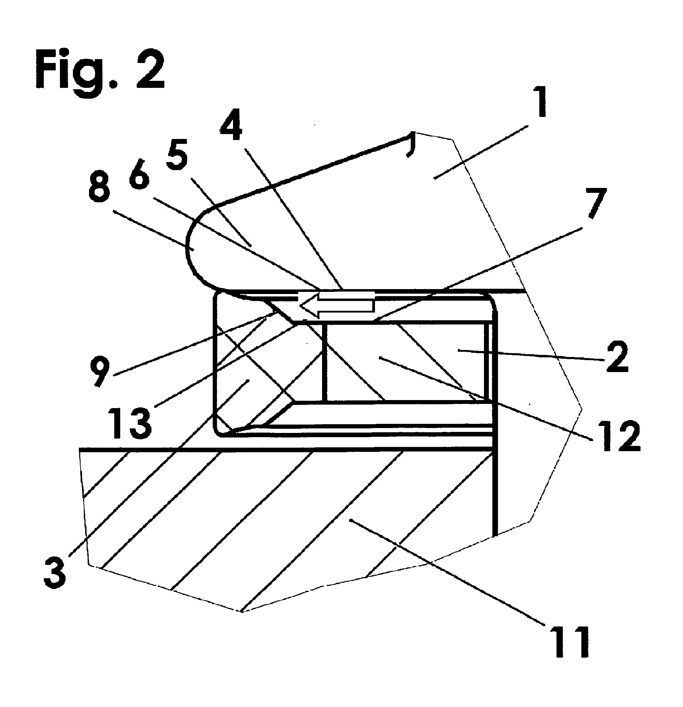

In Fig. 2 ist ein Ausschnitt der Abdichtung aus Fig. 1 gezeigt.

Wie zuvor beschrieben, weist der Dichtwulst 3 eine sich selbst zentrierende Oberfläche 9 auf. Während der Montage der Abdichtung wird das Befestigungselement 1 in die Bohrung 10 des Maschinenelements 11 montiert, wobei zwischen der Unterseite 6 des Bundes 5 und dem Maschinenelement 11 die Unterlegscheibe 2 angeordnet ist. Während der Montage des Befestigungselements 1 in der Bohrung 10 des Maschinenelements 11 wird der axiale Abstand zwischen der Unterseite 6 des Bundes 5 und der Oberfläche des Maschinenelements 11 immer weiter verringert, bis der Dichtwulst 3 sowohl die Unterseite 6 des Bundes 5 als auch die Oberfläche des Maschinenelements 11 lose anliegend berührt. Wird anschließend das Befestigungselement 1 weiter in die Bohrung 10 des Maschinenelements 11 eingeschraubt, zentriert sich die Unterlegscheibe 2 durch den zweistufig und trichterförmig ausgebildeten Dichtwulst 3 selbsttätig zur Unterseite 6 des Bundes 5. Dieser Effekt der Selbstzentrierung ist in Fig. 2 durch den Pfeil 13 dargestellt.

In Fig. 3 sind die Verschraubung und die Abdichtung während ihrer bestimmungsgemäßen Verwendung gezeigt.

Ausgehend vom in Fig. 1 dargestellten Zustand über den Zustand, der in Fig. 2 gezeigt ist, ist das Befestigungselement 1 in Fig. 3 in die Bohrung 10 des Maschinenelements 11 vollständig eingeschraubt, wobei der Flachring 12 der Unterlegscheibe 2 als Kraftbegrenzer für den Dichtwulst 3 dient. Die Unterseite 6 des Bundes 5 berührt eine Stirnseite des Flachrings 12 anliegend, wobei die andere Stirnseite des Flachrings 12 ebenfalls anliegend auf der Oberfläche des Maschinenelements 11 angeordnet ist.

Der Dichtwulst 3, der den Flachring 12 außenumfangsseitig umschließt, ist unter axialer Vorspannung zwischen der Unterseite 6 des Bundes 5 und der Oberfläche des Maschinenelements 11 angeordnet und dichtet die Verschraubung ab, wobei der Außenradius des Bunds 5 durch den Dichtwulst 3 nachgebildet ist.

Die Oberfläche 9 der Oberseite 7 der Unterlegscheibe 2 ist durch ihre mehrstufige Kontur kongruent zur Unterseite 6 des Bunds 5 des Befestigungselements 1 ausgebildet.

Durch die deckungsgleiche Ausbildung der Unterlegscheibe 2 und des Befestigungselements 1 im Bereich ihrer gegenseitigen Berührung, ergibt sich eine im Wesentlichen glatte Oberfläche der Verschraubung, frei von sprunghaften Richtungsänderungen, Spalten und Vorsprüngen. Eine solche im Wesentlichen glatte und gut zu reinigende Oberfläche ist Voraussetzung dafür, dass die Abdichtung und die Verschraubung auch während einer langen Gebrauchsdauer keimfrei bleiben. Eine solche Verschraubung und Abdichtung kann deshalb im Lebensmittel- oder Pharmabereich zur Anwendung gelangen und erfüllt alle gängigen Hygiene-Vorschriften.

## Patentansprüche

1. Abdichtung eines Befestigungselements (1), umfassend das Befestigungselement (1) und eine Unterlegscheibe (2) dafür, wobei das Befestigungselement (1) und die Unterlegscheibe (2) koaxial und axial benachbart zueinander angeordnet sind, wobei die Unterlegscheibe (2) außenumfangsseitig einen Dichtwulst (3) aus einem gummielastischen Dichtungswerkstoff aufweist und wobei der Dichtwulst (3) die Unterseite (4) des Befestigungselements (1) während der bestimmungsgemäßen Verwendung der Abdichtung dichtend berührt, wobei das Befestigungselement (1) auf der der Unterlegscheibe (2) axial zugewandten Seite einen Bund (5) aufweist, mit einer der Unterlegscheibe (2) axial zugewandten Unterseite (6), wobei die Unterlegscheibe (2) eine dem Bund (5) axial zugewandte Oberseite (7) aufweist, **dadurch gekennzeichnet, dass** sich die Unterseite (6) des Bundes (5) und die Oberseite (7) der Unterlegscheibe (2) während der bestimmungsgemäßen Verwendung der Abdichtung dichtend anliegend berühren, wobei die Unterseite (6) des Bundes (5) und die Oberseite (7) der Unterlegscheibe (2) im Wesentlichen deckungsgleich ausgebildet sind und der Dichtwulst (3) die außenumfangsseitige Begrenzung (8) der Unterseite (6) des Bundes (5) dichtend anliegend berührt.

2. Abdichtung nach Anspruch 1, **dadurch gekennzeichnet, dass** das Befestigungselement (1) als Schraube oder als Mutter ausgebildet ist.

3. Abdichtung nach Anspruch 2, **dadurch gekennzeichnet, dass** die Mutter als Hutmutter ausgebildet ist.

4. Abdichtung nach einem der Ansprüche 1 bis 3, **dadurch gekennzeichnet, dass** das Befestigungselement (1) und der Bund (5) einstückig ineinander übergehend ausgebildet sind.

5. Abdichtung nach einem der Ansprüche 1 bis 4, **dadurch gekennzeichnet, dass** der Dichtwulst (3) auf seiner der Unterseite (6) des Bundes (5) axial zugewandten Oberseite (7) eine im Wesentlichen trichterförmig ausgebildete Oberfläche (9) aufweist.

6. Abdichtung nach Anspruch 5, **dadurch gekennzeichnet, dass** die Oberfläche (9) zumindest zweistufig radial nach außen erweitert ist.

7. Abdichtung nach einem der Ansprüche 1 bis 6, **dadurch gekennzeichnet, dass** die Oberfläche (9) der Oberseite (7) selbst zentrierend ausgebildet ist.

8. Verschraubung, umfassend eine Abdichtung mit Befestigungselement (1) und Unterlegscheibe (2) nach einem der Ansprüche 1 bis 7, wobei das Befestigungselement (1) kraft- und/oder formschlüssig in einer Bohrung (10) eines Maschinenelements (11) angeordnet ist, wobei der Dichtwulst (3) unter elastischer axialer Vorspannung dichtend zwischen der Unterseite (6) des Bundes (5) des Befestigungselements (1) und dem Maschinenelement (11) angeordnet ist.

9. Verwendung einer Abdichtung nach einem der Ansprüche 1 bis 7 und einer Verschraubung nach Anspruch 8 in produktführenden Bereichen der Lebensmittel- oder Pharmaindustrie und/oder in Produktionsanlagen im Lebensmittel- oder Pharmabereich.

## Claims

1. Seal for a fastening element (1), comprising the fastening element (1) and a washer (2) therefor, wherein the fastening element (1) and the washer (2) are arranged coaxially and axially adjacent to each other, wherein the washer (2) has a sealing bead (3) made of a rubber-elastic sealing material on the outer circumferential side, and wherein the sealing bead (3) is in contact in a sealing manner with the lower side (4) of the fastening element (1) during the correct use of the seal, wherein the fastening element (1) has a collar (5) on the side axially facing the washer (2), with a lower side (6) axially facing the washer (2), wherein the washer (2) has an upper side (7) axially facing the collar (5), **characterized in that** the lower side (6) of the collar (5) and the upper side (7) of the washer (2) are in sealing and bearing contact during the correct use of the seal, wherein the lower side (6) of the collar (5) and the upper side (7) of the washer (2) are formed substantially congruently and the sealing bead (3) is in sealing and bearing contact with the outer circumferential boundary (8) of the lower side (6) of the collar (5).

2. Seal according to Claim 1, **characterized in that** the fastening element (1) is designed as a screw or as a nut.

3. Seal according to Claim 2, **characterized in that** the nut is designed as a cap nut.

4. Seal according to one of Claims 1 to 3, **characterized in that** the fastening element (1) and the collar (5) are designed merging integrally into each other.

5. Seal according to one of Claims 1 to 4, **characterized in that** the sealing bead (3) has a surface (9) of substantially funnel-shaped design on its upper side (7) axially facing the lower side (6) of the collar (5).

6. Seal according to Claim 5, **characterized in that** the surface (9) is widened radially outwards at least in two stages.

7. Seal according to one of Claims 1 to 6, **characterized in that** the surface (9) of the upper side (7) is of self-centring design.

8. Screw connection, comprising a seal with a fastening element (1) and washer (2) according to one of Claims 1 to 7, wherein the fastening element (1) is arranged in a frictional and/or form-fitting manner in a bore (10) in a machine element (11), wherein the sealing bead (3) is arranged in a sealing manner under elastic axial prestress between the lower side (6) of the collar (5) of the fastening element (1) and the machine element (11).

9. Use of a seal according to one of Claims 1 to 7, and of a screw connection according to Claim 8 in product-conducting regions of the foodstuffs or pharmaceutical industry and/or in production systems in the foodstuffs or pharmaceutical sphere.

## Revendications

1. Joint d'étanchéité d'un élément de fixation (1), comprenant l'élément de fixation (1) et une rondelle d'appui (2) pour celui-ci, dans lequel l'élément de fixation (1) et la rondelle d'appui (2) sont disposés coaxialement et axialement à proximité l'un de l'autre, dans lequel la rondelle d'appui (2) présente du côté périphérique extérieur un rebord d'étanchéité (3) en un matériau d'étanchéité en gomme élastique et dans lequel le rebord d'étanchéité (3) touche de façon étanche le côté inférieur (4) de l'élément de fixation (1) pendant l'utilisation normale du joint d'étanchéité, dans lequel l'élément de fixation (1) présente, sur le côté tourné axialement vers la rondelle d'appui (2), un bourrelet (5), avec un côté inférieur (6) tourné axialement vers la rondelle d'appui (2), dans lequel la rondelle d'appui (2) présente un côté supérieur (7) tourné axialement vers le bourrelet (5), **caractérisé en ce que** le côté inférieur (6) du bourrelet (5) et le côté supérieur (7) de la rondelle d'appui (2) se touchent en application étanche pendant l'utilisation normale du joint d'étanchéité, dans lequel le côté inférieur (6) du bourrelet (5) et le côté supérieur (7) de la rondelle d'appui (2) sont configurés avec un recouvrement essentiellement total et le rebord d'étanchéité (3) touche en application étanche la limite périphérique extérieure (8) du côté inférieur (6) du bourrelet (5).

2. Joint d'étanchéité selon la revendication 1, **caractérisé en ce que** l'élément de fixation (1) est réalisé en forme de vis ou d'écrou.

3. Joint d'étanchéité selon la revendication 2, **caractérisé en ce que** l'écrou est un écrou à chapeau.

4. Joint d'étanchéité selon l'une quelconque des revendications 1 à 3, **caractérisé en ce que** l'élément de fixation (1) et le bourrelet (5) sont réalisés en prolongement l'un dans l'autre d'un seul tenant.

5. Joint d'étanchéité selon l'une quelconque des revendications 1 à 4, **caractérisé en ce que** le rebord d'étanchéité (3) présente, sur son côté supérieur (7) tourné axialement vers le côté inférieur (6) du bourrelet (5), une surface (9) essentiellement en forme d'entonnoir.

6. Joint d'étanchéité selon la revendication 5, **caractérisé en ce que** la surface (9) s'élargit radialement vers l'extérieur en au moins deux étages.

7. Joint d'étanchéité selon l'une quelconque des revendications 1 à 6, **caractérisé en ce que** la surface (9) du côté supérieur (7) est réalisée à auto-centrage.

8. Assemblage vissé, comprenant un joint d'étanchéité avec un élément de fixation (1) et une rondelle d'appui (2) selon l'une quelconque des revendications 1 à 7, dans lequel l'élément de fixation (1) est disposé par adhérence et/ou emboîtement dans un alésage (10) d'un élément de machine (11), dans lequel le rebord d'étanchéité (3) est disposé sous une précontrainte axiale élastique de façon étanche entre le côté inférieur (6) du bourrelet (5) de l'élément de fixation (1) et l'élément de machine (11).

9. Utilisation d'un joint d'étanchéité selon l'une quelconque des revendications 1 à 7 et d'un assemblage vissé selon la revendication 8 dans des sections de conduite de produits dans l'industrie alimentaire ou pharmaceutique et/ou dans des installations de production dans le domaine alimentaire ou pharmaceutique.
